# EUROPÄISCHE PATENTSCHRIFT

(11) **EP 0 430 024 B1**
(45) Veröffentlichungstag und Bekanntmachung des Hinweises auf die Patenterteilung: **03.11.1993**
(21) Anmeldenummer: 90122144.0
(22) Anmeldetag: 20.11.1990
(51) Int. Cl.: B25D 17/26, F16N 7/38, F16N 11/10, F16N 29/04

(54) **Automatische Schmiereinrichtung für den Meissel eines hydraulischen Schlagwerks**
Automatic greasing device for the bit of a hydraulic percussive tool
Dispositif automatique de graissage pour ciseau d'un outil à percussion hydraulique

(30) Priorität: 01.12.1989 DE 3939785
(43) Veröffentlichungstag der Anmeldung: 05.06.1991
(73) Patentinhaber: KRUPP MASCHINENTECHNIK GESELLSCHAFT MIT BESCHRÄNKTER HAFTUNG, 45143 Essen (DE)
(72) Erfinder: Arndt, Friedrich Karl, Dr.-Ing., W-4300 Essen 1 (DE); Bartels, Robert-Jan, Dr.-Ing., W-4300 Essen 17 (DE); Vielhaber, Heribert, W-4300 Essen 1 (DE)

(56) Entgegenhaltungen:
- EP-A- 0 120 522
- GB-A- 2 157 219
- NL-A- 8 500 784

## Beschreibung

Die Erfindung betrifft eine automatische Schmiereinrichtung für den Meißel eines hydraulischen Schlagwerks, mit einer an einen Schmiermittel-Vorratsbehälter angeschlossenen Fördereinheit, mittels welcher die den Meißel abstützende Meißel-Führung mit Schmiermittel beaufschlagbar ist.

Hydraulische Schlagwerke (auch als Hydraulikhämmer beziehungsweise Felsmeißel, Hydromeißel oder Gesteinsbrecher bezeichnet) - bekannt beispielsweise aus der deutschen Offenlegungsschrift 34 43 542 - sind in vielen Fällen an einer Trägereinheit mit zugehöriger Energieversorgung befestigt, beispielsweise am Ausleger eines Hydraulikbaggers. Beim Einsatz des Schlagwerks wird dessen mittels eines Schlagkolbens angetriebener Meißel, der pro Sekunde eine erhebliche Anzahl Längsbewegungen ausführt, unvermeidlich brechstangenartig belastet mit der Folge, daß die Meißel-Führungen und der zugehörige Meißelabschnitt einer hohen Beanspruchung unterliegen. Um einem übermäßigen Verschleiß und/oder Reibverschweißungen im Bereich der Meißel-Führungen entgegenzuwirken, müssen diese ausreichend geschmiert werden, und zwar nach Möglichkeit kontinuierlich oder in regelmäßigen, gegebenenfalls an die Arbeitsverhältnisse angepaßten Zeitabständen.

Automatische Schmiereinrichtungen der eingangs erwähnten Gattung sind bisher für die Versorgung der Meißel-Führungen mit flüssigen Schmiermitteln (also Ölen oder dergleichen) eingesetzt worden, und zwar als Bestandteil einer zentralen, längere Schmiermittelleitungen aufweisenden Versorgungseinheit.
Insbesondere bei höherer und höchster Beanspruchung des Schlagwerks hat sich die Verwendung von Fetten mit sehr hohem Festschmierstoffgehalt (beispielsweise Meißelpasten) als Schmiermittel als vorteilhaft erwiesen; diese sind aufgrund ihrer Viskosität und ihres Festschmierstoffgehaltes allerdings bereits bei normalen Umgebungstemperaturen schwer förderbar, wodurch die Zuführung in den Bereich der Schmierstelle unter Umständen in Frage gestellt ist. Aus diesem Grunde erfolgt bisher die Versorgung der Meißel-Führung mit Fetten der genannten Art mittels einer mit Fett gefüllten Handhebelpresse. Da diese von Hand betätigt wird, hängt die Schmiermittelversorgung allein von der Sachkenntnis und/oder Sorgfalt der betreffenden Bedienungsperson ab.

Der Erfindung liegt die Aufgabe zugrunde, eine automatische Schmiereinrichtung für den Meißel eines hydraulischen Schlagwerks anzugeben, mittels welcher sich Fette mit sehr hohem Festschmierstoffgehalt auch bei tieferen Temperaturen zuverlässig in den Bereich der Meißel-Führung fördern lassen.
Die Schmiereinrichtung sollte darüber hinaus so beschaffen sein, daß der Schmiervorgang überwacht werden kann.
Weiterhin sollte - durch Veränderung der zuzuführenden Schmiermittelmenge und/oder der Schmierintervalle - eine Anpassung an die jeweils vorliegenden beziehungsweise zu erwartenden Arbeitsverhältnisse möglich sein.

Die gestellte Aufgabe wird durch eine Schmiereinrichtung mit den Merkmalen des Anspruchs 1 gelöst.
Der der Erfindung zugrundeliegende Lösungsgedanke besteht danach darin, der eigentlichen Fördereinheit das als Schmiermittel dienende Schmierfett über einen druckbeaufschlagten Schmiermittel-Vorratsbehälter zuzuführen und die Fördereinheit derart auszubilden, daß ihr Förderdruck von dem das Schlagwerk antreibenden Betriebsdruck hervorgerufen wird und sie jeweils bei Beaufschlagung des Schlagwerks mit dem Betriebsdruck einen Förderhub mit einstellbarer Größe ausführt.
Die Schmiereinrichtung arbeitet dabei insofern selbsttätig, als die Fördereinheit, die an die Druckenergieversorgung für das Schlagwerk angeschlossen ist, in jedem Falle bei Beaufschlagung des Schlagwerks mit dem Betriebsdruck einen Förderhub ausführt; durch diesen Förderhub, dessen Größe sich zur Anpassung des Fördervolumens an unterschiedliche Arbeitsverhältnisse verändern läßt, wird das über den Schmiermittel-Vorratsbehälter in den Förderraum eingepreßte Schmierfett in Richtung auf die Meißel-Führung weitergefördert. In ihrer einfachsten Ausführungsform ist die Schmiereinrichtung derart ausgestaltet, daß die fortwährend vom Schmiermittel-Vorratsbehälter mit Schmierfett beaufschlagte Fördereinheit jeweils einen einzigen Förderhub nur dann ausführt, wenn das Schlaggerät durch Anlegen des Betriebsdrucks in Betrieb gesetzt wird. Der sich daraus ergebende Umfang der Schmiermittelversorgung ist in den bei weitem überwiegenden Fällen ausreichend, da das Schlagwerk jeweils bereits nach kurzer Eingriffsdauer von dem zu bearbeitenden Material abgezogen und/oder stillgesetzt wird; das erneute Inbetriebsetzen des Schlagwerks zieht dann die Durchführung eines weiteren Schmiervorgangs nach sich.
Unabhängig von den Arbeitsverhältnissen kann die Bedienungsperson die Schmiermittelversorgung auch dadurch beeinflussen, daß sie von Zeit zu Zeit willkürlich das Schlagwerk stillsetzt und wieder einschaltet.
Bei einer Weiterbildung des Erfindungsgegenstandes ist die Fördereinheit unter Zwischenschaltung eines Unterbrechers an die Druckleitung des Schlagwerks angeschlossen, welcher die Verbindung zur Druckleitung - beginnend jeweils mit dem Inbetriebsetzen des Schlagwerks - in aufeinanderfolgenden Zeitpunkten mit vorwählbarem Zeitabstand freigibt (Anspruch 2). Der damit erzielte Vorteil besteht darin, daß die Fördereinheit selbsttätig und in vorgegebenen, einstellbaren Zeitabständen nach Einschalten des Schlagwerks weitere, zusätzliche Förderhübe ausführt; die Meißel-Führung wird dementsprechend bei längerer Arbeitsdauer des Schlagwerks in den vorgegebenen Zeitabständen mehrfach geschmiert. Bedingt durch die von der Bedienungsperson unabhängige Wiederholung von Schmiervorgängen kann auch bei längerer, ununterbrochener Arbeitsdauer des Schlagwerks kein Schmiermittelmangel auftreten.
Der Unterbrecher kann insbesondere als zeitgesteuertes Sperrventil ausgebildet sein (Anspruch 3). Die Zeitsteuerung kann dabei insbesondere aus einer Steuerung mit einem Zeitrelais bestehen, welches mit dem Inbetriebsetzen des Schlagwerks aktiviert wird und über zeitlich aufeinanderfolgende Impulse jeweils kurzzeitig das Sperrventil in die Öffnungsstellung bewegt, in welcher die Fördereinheit unter Einwirkung des Betriebsdrucks einen Förderhub ausführt.

Abweichend von der soeben beschriebenen Ausführungsform (gemäß Anspruch 2 und 3) kann der Erfindungsgegenstand auch in der Weise ausgestaltet sein, daß er lediglich einen von Hand betätigbaren Unterbrecher aufweist. Dieser würde die Bedienungsperson in die Lage versetzen, im Anschluß an den selbsttätig ausgeführten Schmiervorgang ohne Stillsetzen des Schlagwerks nach Belieben einen weiteren Schmiervorgang beziehungsweise mehrere weitere Schmiervorgänge nacheinander auszulösen.

Das innerhalb des Schmiermittel-Vorratsbehälters bewegliche Trennelement (vorzugsweise in Gestalt eines Kolbens oder einer Membran), über welches das Schmierfett mit einer Vortriebskraft beaufschlagt ist, kann an einer mechanisch oder hydraulisch wirksamen Druckfeder abgestützt sein. Vorzugsweise besteht diese aus einem Gaspolster, welches über das Trennelement gegen das Schmierfett abgeschirmt ist (Anspruch 4).

Die Fördereinheit weist vorzugsweise einen Förderkolben mit einem seiner geradlinigen Förderbewegung entgegenwirkenden Rückstellelement, einen in den Förderraum einmündenden Förderkanal mit einem Rückschlagventil und einen Verstellanschlag auf, welcher den Förderhub des Förderkolbens begrenzt; sie ist weiterhin derart ausgestaltet, daß der Verbindungskanal zwischen dem Schmiermittel-Vorratsbehälter und der Fördereinheit - in Richtung der Förderbewegung gesehen - vor dem Förderkanal in den Förderraum einmündet und mittels des Förderkolbens verschließbar ist (Anspruch 5).
Solange der Förderkolben nicht mit dem Betriebsdruck des Schlagwerks beaufschlagt ist, nimmt er unter Einwirkung des Rückstellelements eine Ausgangslage ein, in welcher durch den Verbindungskanal hindurch Schmierfett in den Förderraum eingedrückt werden kann. Bei Wirksamwerden des Betriebsdrucks unterbricht der Förderkolben während seines Förderhubes die Verbindung des Verbindungskanals zum Förderraum und schiebt das Schmierfett bei geöffnetem Rückschlagventil solange in den Förderkanal ein, bis der Verstellanschlag - im einfachsten Fall ein Verstellbolzen oder eine Verstellschraube - die Förderbewegung des Förderkolbens abbricht. Die Größe des Förderhubes (und damit das zugehörige Fördervolumen) läßt sich in einfacher Weise beispielsweise dadurch herabsetzen, daß der Verstellanschlag in Richtung auf den Förderkolben verschoben und dann festgehalten wird.

Die Betriebssicherheit des Erfindungsgegenstandes läßt sich dadurch verbessern, daß der Schmiermittel-Vorratsbehälter mit einem Füllstandssensor ausgestattet ist, der mit der Annäherung des Füllstandes an einen Grenzwert ein Füllstandssignal auslöst (Anspruch 6); dieses macht die Bedienungsperson darauf aufmerksam, daß der Schmiermittelvorrat ergänzt werden muß. Der Füllstandssensor kann dabei in der Weise ausgestaltet sein, daß das Füllstandssignal mit der Annäherung des Trennelements an eine Grenzstellung ausgelöst wird (Anspruch 7); eine besonders einfach aufgebaute Ausführungsform weist als Füllstandssensor einen Annäherungs- oder Endschalter auf, der durch das Trennelement selbst oder durch mit diesem mitbewegte Bestandteile betätigt wird.
Das Füllstandssignal läßt sich über eine dem Füllstandssensor nachgeschaltete Anzeigeeinheit optisch und/akustisch erkennbar machen (Anspruch 8); als Anzeigeeinheit kommt dabei eine Warnlampe beziehungsweise eine Hupe oder ein Horn in Betracht.
Eine vorteilhafte Weiterbildung der hier angesprochenen Ausführungsform ist dadurch gekennzeichnet, daß dem Füllstandssensor ein federbelastetes Abschaltventil nachgeschaltet ist, welches bei Anliegen des Füllstandssignals - die Schließstellung einnehmend - die Druckenergiezufuhr in das Schlagwerk unterbricht (Anspruch 9). Das Abschaltventil führt nach Annäherung des Füllstandes im Schmiermittel-Vorratsbehälter an einen Grenzwert nicht nur die Stillsetzung des Schlagwerks herbei; die Bedienungsperson ist anschließend (d. h. ohne vorrausgehende Ergänzung des Schmiermittelvorrats) nicht in der Lage, das Schlagwerk erneut einzuschalten. Um die Arbeitsweise der Fördereinheit und die Durchführung der Schmiervorgänge überwachen zu können, bist der vom Förderraum ausgehende Förderkanal einen Schmierkontrollsensor mit nachgeschalteter Kontrollanzeige auf, der jeden Förderhub in Form eines Fördersignals erkennbar macht (Anspruch 10); vorzugsweise erfolgt die Kontrollanzeige auf optischem Wege.
Der Schmierkontrollsensor kann insbesondere als in den Förderkanal eingebauter Druckfühler ausgebildet sein (Anspruch 11). Dieser erfaßt den Druckanstieg im Förderkanal, welcher durch einen Förderhub der Fördereinheit verursacht ist, und wandelt ihn in einen von der Kontrollanzeige verarbeiteten Impuls um.

Die Handhabung des Erfindungsgegenstandes läßt sich dadurch vereinfachen, daß der Schmiermittel-Vorratsbehälter aus einer handelsüblichen Schmiermittel-Kartusche besteht, die auswechselbar in eine Aufnahme an der Fördereinheit einsetzbar ist (Anspruch 12). Bei einer derartigen Ausführungsform läßt sich der Schmiermittel-Vorrat einfach und ohne großen Zeitverlust dadurch ergänzen, daß der bisher benutzte Schmiermittel-Vorratsbehälter von der Fördereinheit abgetrennt und durch eine volle Schmiermittel-Kartusche ersetzt wird.

Mit Rücksicht auf die geringe Fließfähigkeit des Schmierfetts ist die Fördereinheit bezüglich des Schlagwerks derart angeordnet, daß der vom Schmierfett zwischen ihrer Förderkammer und der Meißel-Führung zurückzulegende Weg klein ist.
Diesem Merkmal entsprechend ist die Schmiereinrichtung - bestehend im wesentlichen aus dem Schmiermittel-Vorratsbehälter und der Fördereinheit - in das Schlagwerk integriert, am Schlagwerk befestigt oder zumindest in der Nähe der Schmierstelle, also der Meißel-Führung, gehalten (Anspruch 13).

Die Erfindung wird nachfolgend anhand in der Zeichnung dargestellter Ausführungsbeispiele erläutert.
Es zeigen:
- Fig. 1a: einen Vertikalschnitt durch eine als Pumpe ausgebildete Fördereinheit für Schmierfett mit zugehörigem Schmiermittel-Vorratsbehälter, wobei der Förderkolben der Fördereinheit die drucklose Ausgangslage einnimmt,
- Fig. 1b: einen Schnitt durch die in Fig. 1a dargestellte Fördereinheit während des Förderhubes mit Blickrichtung gemäß Pfeil I in Fig. 1a.
- Fig. 2: in Form eines Schaltschemas das Zusammenwirken der Fördereinheit nebst Schmiermittel-Vorratsbehälter mit einem Schlagwerk in Gestalt eines Hydraulikhammers und mit zusätzlichen Kontrolleinrichtungen,

und
- Fig. 3: ein gegenüber Fig. 2 abgewandeltes Schaltschema mit einer Fördereinheit, deren Betriebsweise zusätzlich durch ein Steuergerät beeinflußt ist.

Hauptbestandteile des Erfindungsgegenstandes sind eine als Pumpe wirksame Fördereinheit 1 und ein lösbar an dieser befestigter Schmiermittel-Vorratsbehälter 2.
Die Fördereinheit setzt sich aus einem Zylindergehäuse 1a mit daran angebrachtem Befestigungsflansch 1b und einer in der Darstellung untenliegenden Abschlußplatte 1c mit einer Bohrung 1d zusammen, über welche ein innerhalb des Zylindergehäuses 1a geradlinig verschiebbarer Förderkolben 3 gegebenenfalls mit Druck beaufschlagt werden kann.
In der drucklosen Ausgangslage (Fig. 1a) stützt sich der Förderkolben 3 unter Einwirkung einer vorgespannten Rückstellfeder 4 über seine Fußfläche 3a an der Abschlußplatte 1c ab. Die Rückstellfeder ist über eine Platte 5 innerhalb des Zylindergehäuses 1a gehalten. Die auch die Rückstellfeder aufnehmende Bohrung 1e ist durch eine Dichtung 6 oberhalb der Platte 5 gegen die Umgebung abgedichtet.

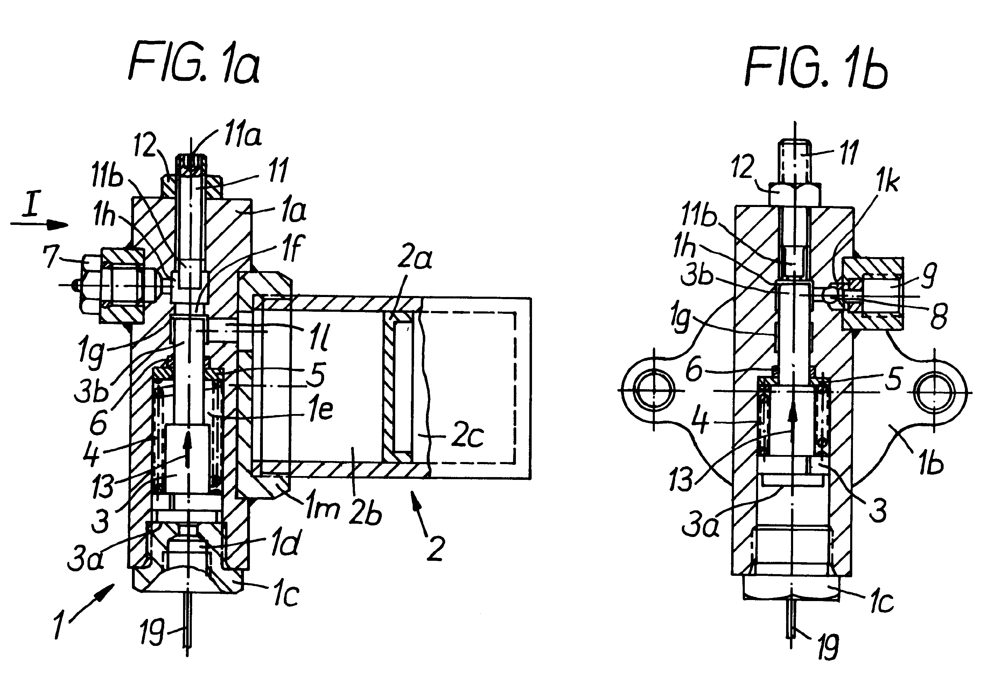

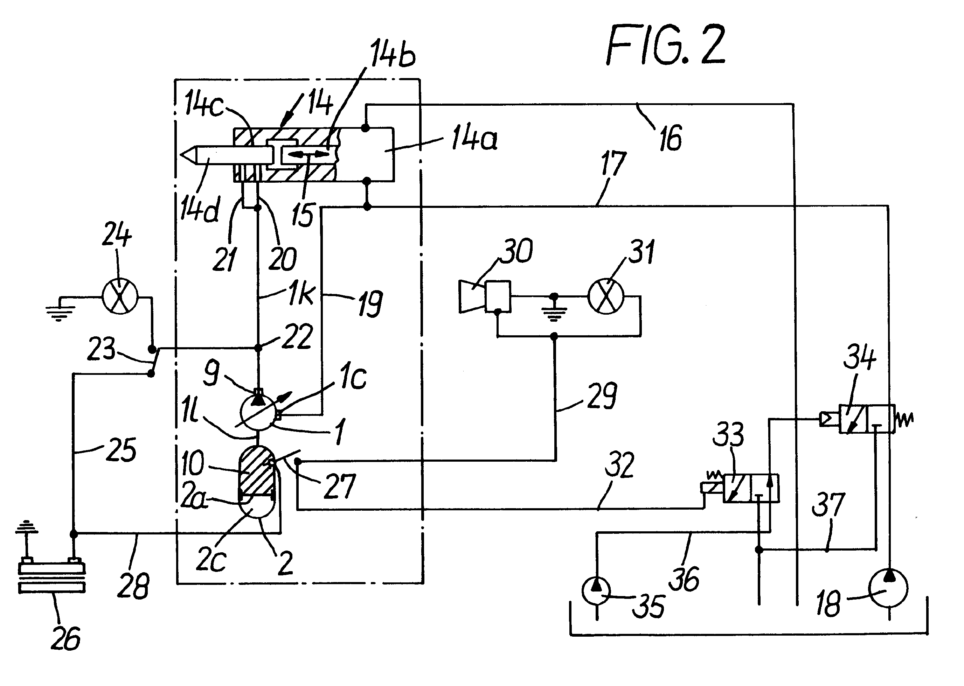

Oberhalb der Dichtung 6 befindet sich ein Förderraum 1f mit einer unteren Erweiterung 1g und einer mit Abstand oberhalb dieser liegenden Erweiterung 1h. Letztere steht einerseits mit einem Entlüftungsventil 7 (Fig. 1a) und andererseits über einen Förderkanal 1k, der mit einem Rückschlagventil 8 ausgestattet ist, mit einer Anschlußbuchse 9 in Verbindung (Fig. 1b). Von der unteren Erweiterung 1g geht ein Verbindungskanal 11 aus, über den der mit einem Schmierfett 10 gefüllte Innenraum 2b des Schmiermittel-Vorratsbehälters 2 (vgl. dazu Fig. 2) an den Förderraum 1f angeschlossen werden kann.
In der Ausgangslage ragt der Förderkolben 3 mit seinem oberen Endabschnitt 3b lediglich teilweise in die Erweiterung 1g hinein, so daß die Verbindung zwischen den Kanälen 1f und 11 nicht unterbrochen ist.
Dem Endabschnitt 3b liegt ein Verstellanschlag 11 in Gestalt eines Gewindebolzens mit Innensechskant 11a gegenüber, dessen Lage bezüglich des Zylindergehäuses 1a durch eine Sicherungsmutter 12 festgelegt ist. Der innen liegende Endabschnitt 11b des Verstellanschlags ragt teilweise in die obere Erweiterung 1h hinein und begenzt den Förderhub, den der Förderkolben 3 bei Druckbeaufschlagung nach oben ausführen kann; die Förderbewegung ist durch einen Pfeil 13 angedeutet.

Fig. 1b läßt erkennen, daß der Förderkolben 3 während seines Förderhubes in Richtung des Pfeils 13 die untere Erweiterung 1g verschließt mit der Folge, daß das im Förderraum 1f befindliche Schmierfett 10 (vgl. dazu Fig. 2) bei geöffnetem Rückschlagventil 8 lediglich durch den Förderkanal 1k hindurch austreten kann. Die Förderbewegung des Förderkolbens 3 kommt dabei zum Stillstand, sobald sich dieser über seinen Endabschnitt 3b am Endabschnitt 11b des Verstellanschlags 11 abstützt.
Nach Lösen der Sicherungsmutter 12 kann der Verstellanschlag 11 in der Weise bewegt werden, daß sein Endabschnitt 11b sich dem beispielsweise die Ausgangslage einnehmenden Förderkolben 3 (Fig. 1a) mehr oder weniger annähert. Eine Verschiebung des Endabschnitts 11b beispielsweise in Richtung auf den Förderkolben 3 hat eine Verkleinerung des Förderhubes in Richtung des Pfeiles 13 und damit eine Verringerung des Fördervolumens der Fördereinheit 1 zur Folge. Es versteht sich von selbst, daß diese im Falle der Beaufschlagung des Förderkolbens 3 mit dem in Frage kommenden Betriebsdruck jeweils nur einen Förderhub ausführt: Solange der Betriebsdruck anliegt, behält der Förderkolben nach Durchführung des Förderhubes seine durch den Verstellanschlag 11 vorgegebene Endlage bei.

Das Innere des Schmiermittel-Vorratsbehälters 2 ist durch ein verschiebbar gehaltenes, kolbenartiges Trennelement 2a in zwei Räume unterteilt: Der der Fördereinheit 1 zugewandte Raum 2b enthält das bereits erwähnte Schmierfett 10, der Raum 2c ein als vorgespannte Druckfeder dienendes Gaspolster. Unter dessen Einwirkung übt das Trennelement 2a auf das im Raum 2b befindliche Schmierfett 10 (vgl. dazu Fig. 2) fortwährend eine Vortriebskraft aus mit der Folge, daß das Schmierfett über den Verbindungskanal 11 und die Erweiterung 1g in den Förderraum 1f hineingedrückt wird, solange der Förderkolben 3 eine Stellung im Bereich seiner Ausgangslage (Fig. 1a) einnimmt, d. h. die Verbindung zwischen den Erweiterungen 1g und 1h noch nicht unterbrochen hat.

Das mit Schmierfett zu versorgende, als Hydraulikhammer ausgebildete hydraulische Schlagwerk 14 besteht aus einem Zylindergehäuse 14a mit einem darin in Richtung des Doppelpfeiles 15 hin und her bewegten Schlagkolben 14b, der seinerseits einen in einer Meißel-Führung 14c abgestützten Meißel 14d antreibt. Das an eine drucklose Rücklaufleitung 16 angeschlossene Schlagwerk 14 läßt sich dadurch in Betrieb setzen, daß seine Druckleitung 17 an eine den Betriebsdruck liefernde Druckenergiequelle 18 angeschlossen wird.
Die Fördereinheit 1 ist über die Abschlußplatte 1c mit der Anschlußbohrung 1d (vgl. dazu Fig. 1a) und eine Leitung 19 an die Druckleitung 17 angeschlossen.
Der über die Anschlußbuchse 9 (vgl. Fig. 1b) hinausgehende Förderkanal 1k teilt sich im Bereich des Meißels 14d in zwei Kanäle 20 und 21 auf, über welche die Meißel-Führung 14c geschmiert wird.
Falls - wie in Fig. 2 dargestellt - das Schlagwerk 14 durch Druckbeaufschlagung der Druckleitung 17 in Betrieb gesetzt wird, führt die gleichzeitig druckbeaufschlagte Fördereinheit 1 einen Förderhub aus; dieser hat zur Folge, daß der Meißel-Führung 14c über den Förderkanal 1k und die Kanäle 20, 21 Schmierfett zugeführt wird. Dem Aufbau und der Wirkungsweise der Fördereinheit 1 entsprechend läßt sich der durch einen Förderhub hervorgerufene Schmiervorgang dadurch beliebig wiederholen, daß die Verbindung zwischen den Leitungen 19, 17 und der Druckenergiequelle unterbrochen und anschließend wieder hergestellt wird.

Zur Überwachung der Schmiervorgänge ist der Förderkanal 1k mit einem als Druckfühler ausgebildeten Schmierkontrollsensor 22 ausgestattet; über diesen kann gegebenenfalls ein Schalter 23 in der Weise betätigt werden, daß eine Kontrollampe 24 über eine Leitung 25 mit einer Energiequelle in Form einer Batterie 26 verbunden wird und ein Fördersignal erzeugt. Dies geschieht nur dann, wenn der mittels des Schmierkontrollsensors 22 im Förderkanal 1k festgestellte Druck einen vorgegebenen Grenzwert nicht unterschreitet.
Der aus den Teilen 22 bis 26 bestehende Überwachungskreis macht also davon Gebrauch, daß jeder Förderhub der Fördereinheit 1, mit dem auch Schmierfett mitbewegt wird, im Förderkanal 1k zeitweilig zu einer Druckerhöhung führt.

Der Füllstand im Schmiermittel-Vorratsbehälter 2 läßt sich mittels eines Füllstandssensors in Gestalt eines Endschalters 27 überwachen, der mit der Annäherung des Trennelements 2a an eine vorgegebene Grenzstellung betätigt wird. Dieser schließt einen Stromkreis mit der Batterie 26 sowie Leitungen 28 und 29, welcher zwei Anzeigeeinheiten in Form einer Hupe 30 und einer Warnlampe 31 umfaßt. Mit der Annäherung des Füllstandes des Schmiermittel-Vorratsbehälters 2 an einen Grenzwert wird im vorliegenden Fall gleichzeitig ein optisches und akustisches Füllstandssignal ausgelöst; diese Signale machen die Bedienungsperson darauf aufmerksam, daß der Vorrat an Schmierfett - gegebenenfalls auch durch Austausch des Schmiermittel-Vorratsbehälters 2 - ergänzt werden muß.

Ausgehend von dem Füllstandssensor im Form des Endschalters 27 ist ein weiterer Überwachungskreis vorgesehen, mit dem sich das Schlagwerk 14 gegebenenfalls selbsttätig stillsetzen läßt.
Dieser Überwachungskreis besteht aus einer Steuerleitung 32 und einem Steuerventil 33, über welches die Stellung eines federbelasteten Abschaltventils 34 beeinflußbar ist; letzteres unterbricht in der nicht dargestellten Schließstellung die Verbindung zwischen der Druckenergiequelle 18 und den mit den Teilen 14 und 1 in Verbindung stehenden Leitungen 17 beziehungsweise 19.
Das Steuerventil 33 ist dabei (abweichend von der rein schematischen Darstellung in Fig. 2) derart geschaltet, daß es das Abschaltventil 34 lediglich bei geschlossenem Endschalter 27 über die Energiequelle 35 und die Steuerleitung 36 mit Steuerdruck beaufschlagt und dadurch die Druckenergiequelle 18 unmittelbar mit der drucklosen Rücklaufleitung 37 verbindet, also das hydraulische Schlagwerk 14 und die Fördereinheit 1 stillsetzt.
Solange kein Füllstandssignal anliegt (der Endschalter 27 dementsprechend geöffnet ist), nimmt das Steuerventil 33 die nicht dargestellte zweite Stellung ein, in welcher die Verbindung zwischen der Steuerleitung 36 und dem Abschaltventil 34 unterbrochen ist und dieses die dargestellte Öffnungsstellung einnimmt.
Der Überwachungskreis mit den Teilen 27 sowie 32 bis 37 stellt nicht nur sicher, daß das hydraulische Schlagwerk 14 bei Anliegen des Füllstandssignals stillgesetzt wird; er schließt auch aus, daß die Bedienungsperson ohne besondere Maßnahmen das Schlagwerk erneut in Betrieb setzen kann.

Der in Fig. 2 strichpunktiert umrandete Bereich soll andeuten, daß die zugehörigen Teile eine Einheit bilden.
Insbesondere sollte die Fördereinheit 1 bezüglich des Schlagwerks 14 derart angeordnet sein, daß der vom Schmierfett zwischen ihrer Förderkammer 1h (vgl. Fig. 1a) und der Meißel-Führung 14c (Fig. 2) zurückzulegende Weg klein ist.

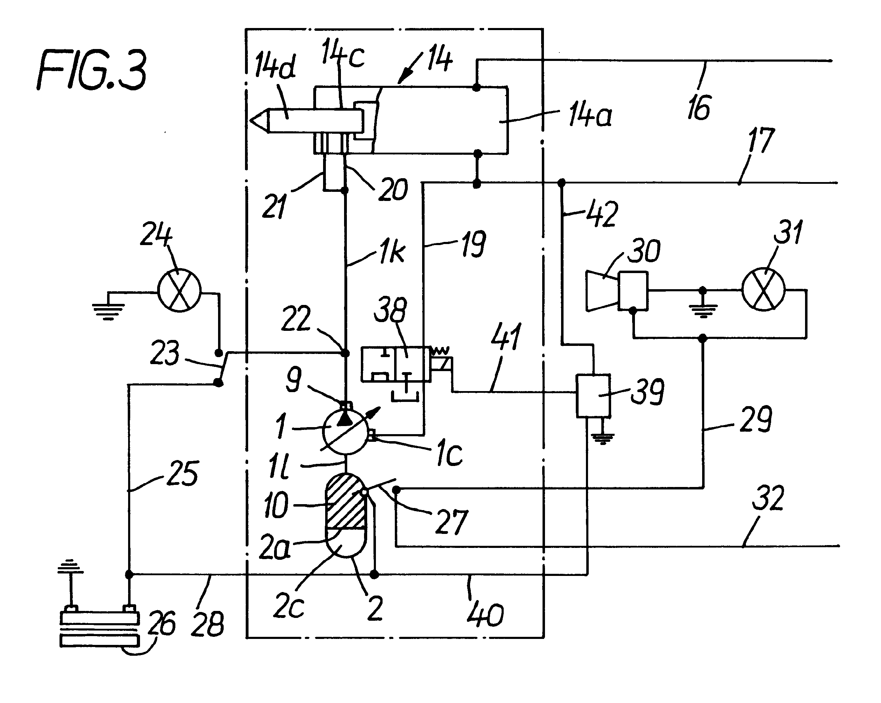

Bei der Ausführungsform gemäß Fig. 3 ist die Fördereinheit 1 unter Zwischenschaltung eines in die Leitung 19 eingebauten Sperrventils 38 an die Druckleitung 17 des Schlagwerks 14 angeschlossen; das Sperrventil 38 wird dabei von einem mit einem Zeitrelais ausgestatteten Steuergerät 39 betätigt, und zwar über eine mit der Batterie 26 in Verbindung stehende Eingangsleitung 40 und eine dem Sperrventil 38 zugeordnete Ausgangsleitung 41.
Das Steuergerät 39 ist weiterhin über eine zweite Eingangsleitung 42 an die Druckleitung 17 angeschlossen mit der Folge, daß das Sperrventil 38 - beginnend jeweils mit dem Inbetriebsetzen des Schlagwerks 14 - in aufeinanderfolgenden Zeitpunkten mit vorwählbarem Zeitabstand die Verbindung zwischen der Fördereinheit 1 und der Druckleitung 17 frei gibt; das Sperrventil 38 nimmt im Normalfall also die nicht dargestellte Sperrstellung ein, in welcher der Förderkolben 3 der Fördereinheit 1 (vgl. dazu Fig. 1a) nicht druckbeaufschlagt ist und seine Ausgangslage einnimmt.
Sobald die Druckleitung 17 zum Inbetriebsetzen des Schlagwerks 14 an die unter Betriebsdruck stehende Druckenergiequelle 18 (vgl. dazu Fig. 2) angeschlossen wird, wird über die zweite Eingangsleitung 42 das Zeitrelais des Steuergeräts 39 in Gang gesetzt; dieses verschiebt über die Ausgangsleitung 41 in vorgegebenen Zeitabständen selbsttätig das Sperrventil 38 in die dargestellte Öffnungsstellung, wodurch der Förderkolben 3 der Fördereinheit 1 jeweils druckbeaufschlagt und der eingangs beschriebene Förderhub mit dem sich daraus ergebenden Schmiervorgang ausgelöst wird. Unter dem Einfluß des Steuergeräts 39 wird das Sperrventil 38 wie ein zeitgesteuertes Sperrventil betätigt. Der damit erzielte Vorteil ist darin zu sehen, daß die Fördereinheit 1 - ohne daß das Schlagwerk 14 stillgesetzt werden müßte - im Anschluß an den ersten Schmiervorgang selbsttätig in einstellbaren Zeitabständen weitere Schmiervorgänge ausführt. Auf diese Weise ist sichergestellt, daß die Meißel-Führung 14 auch bei längerer Arbeitsdauer eine ausreichende Schmierung erfährt.

Die Fördereinheit 1 ist zweckmäßig mit einer Aufnahme 1m (vgl. dazu Fig. 1a) ausgestattet, die es ermöglicht, ohne besonderen Aufwand handelsübliche Schmiermittel-Kartuschen anzubringen beziehungsweise auszuwechseln.

## Patentansprüche

1. Automatische Schmiereinrichtung für den Meißel eines hydraulischen Schlagwerks, mit einer an einen Schmiermittel-Vorratsbehälter angeschlossenen Fördereinheit, mittels welcher die den Meißel abstützende Meißel-Führung mit Schmiermittel beaufschlagbar ist, **gekennzeichnet** durch folgende Merkmale:
- der mit Schmierfett (10) gefüllte Schmiermittel-Vorratsbehälter (2) weist ein bewegliches Trennelement (2a) und eine über dieses auf das Schmierfett einwirkende, vorgespannte Druckfeder auf, über welche dar Schmierfett dem Förderraum (1f) der Fördereinheit (1) zuführbar ist;
- der Förderdruck der Fördereinheit (1) wird von dem das Schlagwerk (14) antreibenden Betriebsdruck hervorgerufen;
- die Fördereinheit (1) führt jeweils bei Beaufschlagung des Schlagwerks (14) mit dem Betriebsdruck einen vorgegebenen Förderhub mit einstellbarer Größe aus.

2. Einrichtung nach Anspruch 1, dadurch gekennzeichnet, daß die Fördereinheit (1) unter Zwischenschaltung eines Unterbrechers (38) an die Druckleitung (17) des Schlagwerks (14) angeschlossen ist, welcher die Verbindung zur Druckleitung - beginnend jeweils mit dem Inbetriebsetzen des Schlagwerks - in aufeinanderfolgenden Zeitpunkten mit vorwählbarem Zeitabstand freigibt.

3. Einrichtung nach Anspruch 2, dadurch gekennzeichnet, daß der Unterbrecher als zeitgesteuertes Sperrventil (38) ausgebildet ist.

4. Einrichtung nach zumindest einem der Ansprüche 1 bis 3, dadurch gekennzeichnet, daß die auf das Trennelement (2a) einwirkende Druckfeder aus einem Gaspolster besteht.

5. Einrichtung nach zumindest einem der Ansprüche 1 bis 4, dadurch gekennzeichnet, daß die Fördereinheit (1) einen Förderkolben (3) mit einem seiner geradlinigen Förderbewegung (Pfeil 13) entgegenwirkenden Rückstellelement (4), einen in den Förderraum (1f) einmündenden Förderkanal (1k) mit einem Rückschlagventil (8) und einem Verstellanschlag (11) aufweist, welcher den Förderhub des Förderkolbens begrenzt, wobei der Verbindungskanal (11) zwischen dem Schmiermittel-Vorratsbehälter (2) und der Fördereinheit (1) - in Richtung der Förderbewegung (Pfeil 13) gesehen - vor dem Förderkanal in den Förderraum einmündet und mittels des Förderkolbens verschließbar ist.

6. Einrichtung nach zumindest einem der Ansprüche 1 bis 5, dadurch gekennzeichnet, daß der Schmiermittel-Vorratsbehälter (2) einen Füllstandssensor (27) aufweist, der mit der Annäherung des Füllstandes an einen Grenzwert ein Füllstandssignal auslöst.

7. Einrichtung nach Anspruch 6, dadurch gekennzeichnet, daß das Füllstandssignal mit der Annäherung des Trennelements (2a) an eine Grenzstellung ausgelöst wird.

8. Einrichtung nach zumindest einem der Ansprüche 6 bis 7, dadurch gekennzeichnet, daß das Füllstandssignal über eine Anzeigeeinheit (30 beziehungsweise 31) optisch und/oder akustisch erkennbar gemacht wird.

9. Einrichtung nach zumindest einem der Ansprüche 6 bis 8, gekennzeichnet durch ein dem Füllstandssensor (27) nachgeschaltetes federbelastetes Abschaltventil (34), das bei Anliegen des Füllstandssignals - die Schließstellung einnehmend - die Druckenergiezufuhr in das Schlagwerk (14) unterbricht.

10. Einrichtung nach zumindest einem der Ansprüche 1 bis 9, dadurch gekennzeichnet, daß der vom Förderraum (1f) ausgehende Förderkanal (1k) einen Schmierkontrollsensor (22) mit nachgeschalteter Kontrollanzeige (24) aufweist, der jeden Förderhub in Form eines Fördersignals erkennbar macht.

11. Einrichtung nach Anspruch 10, dadurch gekennzeichnet, daß der Schmierkontrollsensor (22) als in den Förderkanal (1k) eingebauter Druckfühler ausgebildet ist.

12. Einrichtung nach zumindest einem der Ansprüche 1 bis 11, dadurch gekennzeichnet, daß der Schmiermittel-Vorratsbehälter (2) aus einer handelsüblichen Schmiermittel-Kartusche besteht, die auswechselbar in eine Aufnahme (1m) an der Fördereinheit (1) einsetzbar ist.

13. Einrichtung nach zumindest einem der vorhergehenden Ansprüche, gekennzeichnet durch eine Anordnung der Fördereinheit (1) bezüglich des Schlagwerks (14) in der Weise, daß der vom Schmierfett (10) zwischen ihrer Förderkammer (1f) und der Meißel-Führung (14c) zurückzulegende Weg klein ist.

## Claims

1. Automatic greasing device for the bit of a hydraulic percussive tool, having a feed unit connected to a lubricant container by means of which grease may be applied to the guide supporting the bit, characterised by the following features:
- the lubricant container (2) filled with grease (10) has a movable divider (2a) and a pressure spring, which is pretensioned by this to act on the grease and by means of which the grease may be fed to the delivery chamber (1f) of the feed unit (1);
- the delivery pressure of the feed unit (1) is generated by the operating pressure driving the percussive tool (14);
- on each application of pressure to the percussive tool (14) the feed unit (1) exerts a preset stroke of adjustable magnitude.

2. Device according to Claim 1, characterised in that the feed unit (1) is connected to the pressure pipe (17) of the percussive tool (14) with a disconnection control device (38) disposed therebetween, which opens the connection to the pressure pipe - beginning each time the percussive tool is put into operation - in time sequences at preselected intervals.

3. Device according to Claim 2, characterised in that the control device is in the form of a time-controlled stop valve (38).

4. Device according to at least one of Claims 1 to 3, characterised in that the pressure spring acting on the divider (2a) is composed of a gas cushion.

5. Device according to at least one of Claims 1 to 4, characterised in that the feed unit (1) has a plunger (3) with a restoring element (4) working against its straight path of delivery (arrow 13), a delivery channel (1k) feeding into the delivery chamber (1f) with a non-return valve (8), and a control stop (11), which restricts the stroke of the plunger, wherein the connecting channel (11) between the lubricant container (2) and the feed unit (1) feeds into the delivery chamber upstream of the delivery channel - as viewed in the direction of delivery (arrow 13) - and may be closed by means of the plunger.

6. Device according to at least one of Claims 1 to 5, characterised in that the lubricant container (2) has a level sensor (27) which emits a signal when the filling level approaches a limit value.

7. Device according to Claim 6, characterised in that the signal is emitted when the divider (2a) approaches a limit position.

8. Device according to at least one of Claims 6 to 7, characterised in that the signal is indicated optically and/or acoustically via a display unit (30 or 31).

9. Device according to at least one of Claims 6 to 8, characterised by a spring shut-off valve (34) connected downstream of the level sensor (27), whereby said valve moves into closed position when the level signal is generated and interrupts the supply of pressure to the percussive tool (14).

10. Device according to at least one of Claims 1 to 9, characterised in that the delivery channel (1k) discharging from the delivery chamber (1f) has a lubrication control sensor (22) with a control display (24) connected downstream, which displays each stroke in the form of a delivery signal.

11. Device according to Claim 10, characterised in that the lubrication control sensor (22) is in the form of a pressure probe built into the delivery channel (1k).

12. Device according to at least one of Claims 1 to 11, characterised in that the lubricant container (2) comprises a standard commercial grease cartridge, which is replaceable and may be inserted into a receptacle (1m) in the feed unit (1).

13. Device according to at least one of the previous claims, characterised in that the feed unit (1) is arranged in relation to the percussive tool (14) in such a way that the distance the grease (10) has to travel between its delivery chamber (1f) and the bit guide (14c) is short.

## Revendications

1. Dispositif automatique de graissage pour ciseau d'un outil à percussion hydraulique comportant une unité de transport ou d'alimentation reliée à un réservoir d'agent de graissage au moyen duquel les guides du burin sont alimentés en lubrifiant, caractérisé en ce que :
a) Le réservoir (2), avec une graisse de lubrification (10), comporte un élément de cloisonnement mobile (2a) et un ressort de pression précontraint, agissant sur ladite graisse, et grâce auquel cette dernière peut être transférée dans la chambre (1f) de l'unité d'alimentation ou de transport (1).
b) la pression de transport de l'unité d'alimentation (1) est produite par la pression de fonctionnement du mécanisme de frappe (14) ;
c) chaque action du mécanisme de frappe (14) provoquée par la pression de fonctionnement l'unité d'alimentation ou de transport (1) effectue une course d'alimentation ou de transport prédéterminée dont l'amplitude est réglable.

2. Dispositif selon la revendication 1, caractérisé en ce que l'unité d'alimentation ou de transport (1) est reliée, avec interposition d'un interrupteur (38), au conduit de pression (17) du mécanisme de frappe (14), lequel ouvre la liaison avec le conduit de pression - en commençant respectivement avec la mise en action du mécanisme de frappe à des intervalles de temps successifs dont l'espacement peut être présélectionné.

3. Dispositif selon la revendication 2, caractérisé en ce que l'interrupteur est réalisé sous la forme d'une valve d'arrêt temporisée (38).

4. Dispositif selon l'une au moins, des revendications 1 à 3 caractérisé en ce que le ressort de pression qui agit sur l'élément de séparation (2a) est constitué par un coussin d'air ou de gaz.

5. Dispositif selon l'une au moins, des revendications 1 à 4 caractérisé en ce que l'unité de transport ou d'alimentation (1) comporte un piston (3) avec un élément de l'appel (4) le sollicitant à l'opposé de son mouvement d'alimentation ou de transport rectiligne (flèche 13), un canal d'alimentation ou de transport (1f), pourvu d'une valve de retenue (8) et d'une butée réglable (11) qui limite la course du piston d'alimentation, la disposition étant telle que le canal de liaison (11) débouche, entre le réservoir de lubrifiant (2) et l'unité d'alimentation (1) - en regardant dans la direction d'alimentation ou de transport (flèche 13) - en amont du canal d'alimentation dans la chambre d'alimentation et qu'il peut être fermé au moyen du piston d'alimentation ou de transport.

6. Dispositif selon l'une au moins des revendications 1 à 5, caractérisé en ce que le réservoir de lubrifiant (2) possède un indicateur ou un senseur de remplissage (27) qui lorsque qu'il s'est rempli dans une certaine mesure, délivre un signal indiquant un certain niveau de remplissage.

7. Dispositif selon la revendication 6, caractérisé en ce que le signal de remplissage est déclenché lorsque l'élément de séparation ou de cloisonnement (2a) approche d'une certaine position limite prédéterminée.

8. Dispositif selon l'une au moins des revendications 6 à 7, caractérisé en ce que le signal de degré de remplissage est rendu perceptible par des moyens optiques et/ou acoustiques grâce à une unité de signalisation (respectivement 30, 31).

9. Dispositif selon l'une au moins des revendications 6 à 8, caractérisé par une valve de déconnexion (34), tarée par un ressort relié à un capteur d'état de remplissage (27) qui, en présence du signal d'état de remplissage, se place en position fermée et, ainsi coupe l'arrivée de l'énergie de pression alimentant le mécanisme de frappe (14).

10. Dispositif selon l'une au moins des revendications 1 à 9, caractérisé en ce que le canal d'alimentation (1k), partant de la chambre (1f), comporte un capteur de contrôle de lubrifiant (22) reliée à un voyant de contrôle (24) qui indique chaque course d'alimentation par un signal d'alimentation.

11. Dispositif selon la revendication 10, caractérisé en ce que le senseur de contrôle de lubrifiant (22) présente la forme d'un détecteur de pression incorporé dans le canal d'alimentation ou de transport (1k).

12. Dispositif selon l'une au moins des revendications 1 à 11, caractérisé en ce que le réservoir de lubrifiant (2) est une cartouche de lubrifiant du commerce qui peut être logée, de façon remplaçable, dans un réceptacle (1m) de l'unité d'alimentation ou de transport (1).

13. Dispositif selon l'une quelconque des revendications précédentes, caractérisé en ce que l'unité d'alimentation ou de transport (1) est placée, par rapport au mécanisme de frappe (14) de façon que le trajet que le lubrifiant (10) doit parcourir entre la chambre d'alimentation (1f) et les guides (14c) du burin est court.
